# FASCICULE DE BREVET EUROPEEN

(11) **EP 2 159 952 B1**
(45) Date de publication et mention de la délivrance du brevet: **13.04.2011**
(21) Numéro de dépôt: 09168506.5
(22) Date de dépôt: 24.08.2009
(51) Int. Cl.: H04L 9/06

(54) **Protection d'un algorithme de chiffrement**
Schutz eines Verschlüsselungsalgorithmus
Protection of an encryption algorithm

(30) Priorité: 28.08.2008 FR 0855765
(43) Date de publication de la demande: 03.03.2010
(73) Titulaire: STMicroelectronics (Rousset) SAS, 13790 Rousset (FR)
(72) Inventeur: Martinez, Albert, 13320, BOUC BEL AIR (FR); Teglia, Yannick, 13011, MARSEILLE (FR)
(74) Mandataire: de Beaumont, Michel

(56) Documents cités:
- US-B2- 7 403 620
- MEHRAN MOZAFFARI-KERMANI ET AL: "A Structure-independent Approach for Fault Detection Hardware Implementations of the Advanced Encryption Standard" FAULT DIAGNOSIS AND TOLERANCE IN CRYPTOGRAPHY, 2007. FDTC 2007. WORKSHOP ON, IEEE, PISCATAWAY, NJ, USA, 1 septembre 2007 (2007-09-01), pages 47-53, XP031137890 ISBN: 978-0-7695-2982-0

## Description

### Domaine de l'invention

La présente invention concerne de façon générale les circuits électroniques et, plus particulièrement, les circuits exécutant des fonctions de chiffrement ou de déchiffrement de données numériques.

L'invention s'applique plus particulièrement à la protection de l'exécution d'un algorithme de chiffrement ou de déchiffrement contre des attaques par injection de fautes.

### Exposé de l'art antérieur

Les algorithmes de chiffrement sont de plus en plus utilisés dans le traitement des données et, en particulier, pour transmettre des informations d'un équipement électronique à un autre, qu'il s'agisse d'informations bancaires (cartes à microcircuit à utiliser avec des terminaux de paiement), de fourniture de données multimédia (télévision à péage par exemple), de transmission de données par l'Internet entre plusieurs ordinateurs, etc.

La robustesse des algorithmes de chiffrement est susceptible d'être mise à mal par des fraudeurs tentant de découvrir les clés de chiffrement ou directement les données. Une catégorie d'attaques, dites par injection de fautes, consiste à perturber l'exécution de l'algorithme pour en déduire, par analyse statistique, les clés ou données manipulées.

On a déjà proposé des contre-mesures consistant à détecter un éventuel saut (provoqué par l'injection d'une faute) dans l'exécution d'un algorithme. Toutefois, la détection elle-même est détectable par un fraudeur, par exemple en analysant la consommation du circuit. De plus, la détection est dédiée à un comportement particulier (détection d'un saut). En outre, la plupart des attaques sont répétitives car basées sur une analyse statistique et les contre-mesures provoquent généralement un blocage du circuit détectable par le fraudeur.

L'article de M. MOZAFFARI-KERMANI et al. "A Structure-independent Approach for Fault Detection Hardware lmplementations of the Advanced Encryption Standard" publié au 2007 Workshop on Fault Diagnosis and Tolerance in Cryptography, p.47-53, septembre 2007, Piscataway, NJ, (US) décrit un procédé de protection de l'exécution d'un algorithme cryptographique dans lequel une signature courante des valeurs d'une mémoire de substitution est comparée à une valeur de signature prédite afin de produire une indication d'erreur.

### Résumé

Il serait souhaitable de disposer d'un mécanisme de protection d'un algorithme de chiffrement qui ne fournisse pas d'information à un fraudeur éventuel sur la détection d'un dysfonctionnement.

Il serait par ailleurs souhaitable de disposer d'une solution néanmoins compatible avec la fourniture d'une information au reste du circuit électronique de la détection d'une erreur.

Il serait en outre souhaitable de faire en sorte qu'une perturbation intervenant lors d'une exécution de l'algorithme empêche l'exploitation d'exécutions ultérieures.

Pour atteindre tout ou partie de ces objets ainsi que d'autres, il est prévu un procédé de protection de l'exécution d'un algorithme de chiffrement ou de déchiffrement contre l'introduction d'une perturbation dans une étape mettant en oeuvre une ou plusieurs premières valeurs obtenues à partir de deuxième valeurs censées être invariantes et stockées dans une mémoire non volatile, dans lequel, lors d'une exécution de l'algorithme :
une signature courante des premières valeurs est calculée ;
cette signature courante est combinée avec une signature de référence préalablement mémorisée en mémoire non volatile ; et
le résultat de cette combinaison est pris en compte au moins dans l'étape de l'algorithme mettant en oeuvre lesdites premières valeurs.

Selon un mode de réalisation de la présente invention, la fonction de combinaison est choisie pour que, en cas d'identité entre les deux signatures, une variable résultante combinée avec le résultat de ladite étape ne modifie pas ce résultat.

Selon un mode de réalisation de la présente invention, ladite fonction de combinaison est un OU-Exclusif.

Selon un mode de réalisation de la présente invention, les premières et secondes valeurs sont identiques.

Selon un mode de réalisation de la présente invention, les premières valeurs sont calculées à partir des deuxièmes valeurs et d'une quantité aléatoire.

Selon un mode de réalisation de la présente invention, les premières valeurs correspondent à des tables de substitution de valeurs traitées par l'algorithme.

Selon un mode de réalisation de la présente invention, l'algorithme est de type AES.

Selon un mode de réalisation de la présente invention :
des premières tables de substitution sont combinées à une valeur aléatoire ;
la signature courante est calculée à partir du résultat de la combinaison précédente ;
la variable est calculée en combinant les signatures de référence et courante ainsi que la valeur aléatoire ; et
les étapes de chiffrement sont exécutées avec, comme tables de substitution, les combinaisons des premières tables avec la variable.

Selon un mode de réalisation de la présente invention, l'algorithme est de type DES.

Il est également prévu un circuit électronique de traitement algorithmique.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma-blocs d'un système électronique du type auquel s'applique à titre d'exemple la présente invention ;
la figure 2 est un organigramme simplifié d'un algorithme de chiffrement du type auquel s'applique à titre d'exemple la présente invention ;
la figure 3 illustre le fonctionnement d'un algorithme de type AES ;
la figure 4 est un organigramme illustrant un mode de mise en oeuvre de la protection proposée ; et
la figure 5 est un organigramme partiel illustrant un mode de réalisation appliqué à un algorithme de type DES.

De mêmes éléments ont été désignés par de mêmes références aux différentes figures.

### Description détaillée

Pour des raisons de clarté, seuls les étapes et éléments utiles à la compréhension de l'invention ont été représentées et seront décrits. En particulier, l'exploitation faite des données chiffrées ou à chiffrer par le ou les circuits électroniques n'a pas été détaillée, l'invention étant compatible avec toute exploitation classique. De plus, les différents éléments des circuits électroniques auxquels peut s'appliquer la présente invention n'ont pas été détaillés, l'invention étant là encore compatible avec tout circuit de traitement numérique susceptible d'exploiter des données chiffrées ou à chiffrer, quelles que soient ses autres fonctions.

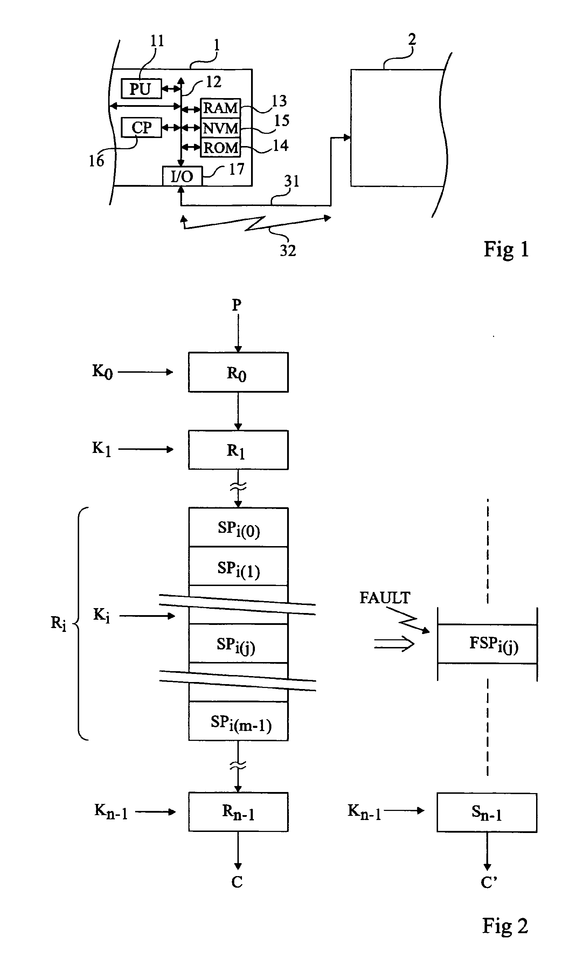

La figure 1 est un schéma-blocs d'un système électronique du type auquel s'applique à titre d'exemple la présente invention. Un circuit de traitement numérique 1 susceptible de chiffrer et/ou de déchiffrer des données est capable de transmettre par liaison filaire 31 ou sans fil (liaison 32) ces données sous forme chiffrée à un deuxième circuit 2 du même type ou différent. L'invention s'applique quel que soit le circuit électronique 1 ou 2, pourvu qu'il soit en mesure de traiter des données chiffrées ou à chiffrer. On fera par la suite référence à un chiffrement de données et à un algorithme de chiffrement, mais tout ce qui va être décrit se transpose sans difficulté au déchiffrement.

Le circuit électronique 1 comporte, entre autres, une unité de traitement 11 (PU - Processing Unit) susceptible de communiquer par l'intermédiaire de bus 12 de commandes, d'adresses et de données avec différentes mémoires parmi lesquelles, par exemple, une mémoire vive 13 (RAM), une mémoire morte 14 (ROM) et une mémoire non volatile 15 (NVM) réinscriptible ou non, ainsi qu'avec d'autres circuits non représentés. Dans l'exemple de la figure 1, le circuit 1 comporte en outre un processeur spécifique 16 de calcul cryptographique (CP - Crypto Processor) susceptible de mettre en oeuvre un ou plusieurs algorithmes de chiffrement de données à l'aide de clés stockées, par exemple, dans une ou plusieurs des mémoires du circuit 1 ou introduites de l'extérieur par l'intermédiaire d'une interface 17 (I/O) de communication avec les circuits externes au circuit 1. En variante, l'algorithme de chiffrement est exécuté par l'unité 11. L'algorithme est généralement stocké (lors de la fabrication du circuit ou d'une programmation initiale) dans la mémoire morte 14 (ou dans la mémoire non volatile 15). Il est transféré pour exécution dans des éléments de mémorisation volatile (mémoire vive 13 ou registres non représentés) servant également au stockage des données traitées.

La figure 2 est un organigramme simplifié d'un algorithme de chiffrement du type auquel s'applique à titre d'exemple la présente invention.

Une donnée à chiffrer P (PLAIN TEXT) est soumise à plusieurs itérations ou tours (ROUND) de chiffrement Rᵢ, (i étant compris entre 0 et n-1) avec, pour chaque tour, application d'une clé ou sous clé Kᵢ, dérivée d'une clé de chiffrement. Dans les algorithmes auxquels s'applique la présente invention, chaque tour utilise au moins une valeur invariante de l'algorithme, c'est-à-dire met en oeuvre un traitement qui utilise (le cas échéant après transformation) une ou plusieurs valeurs, autres que les clés, qui ne changent pas d'une exécution à une autre. Ces valeurs sont, par exemple, stockées en mémoire non volatile 14 ou 15. Dans l'exemple de la figure 2, on suppose que chaque tour comporte des sous étapes SPᵢ₍ⱼ₎, avec j variant de 0 à m-1 et qu'au moins l'une de ces sous étapes (par exemple, SPᵢ₍ⱼ₎) est invariante pour l'exécution de l'algorithme, c'est-à-dire utilise une valeur invariante.

De telles parties invariantes sont le plus souvent celles qui sont visées par les attaques par injection de fautes dans la mesure où elles permettent plus facilement des exploitations statistiques des résultats obtenus. La partie gauche de la figure 2 illustre une exécution normale tandis que sa partie droite illustre l'injection d'une faute FAULT (par exemple, une inversion de l'état de certains bits de la valeur invariante) à l'étape SPᵢ₍ⱼ₎. L'injection de cette faute conduit à une modification des codes invariants de l'algorithme, et l'étape est donc transformée en une étape FSPᵢ₍ⱼ₎.

Le traitement algorithmique se poursuit pour les tours suivants jusqu'au dernier, de sorte que l'algorithme fournit un résultat chiffré C' (Ciphered Result) différent du résultat C qui aurait été obtenu sans faute. L'interprétation de résultats faussés est susceptible de conduire un fraudeur à découvrir les quantités secrètes manipulées.

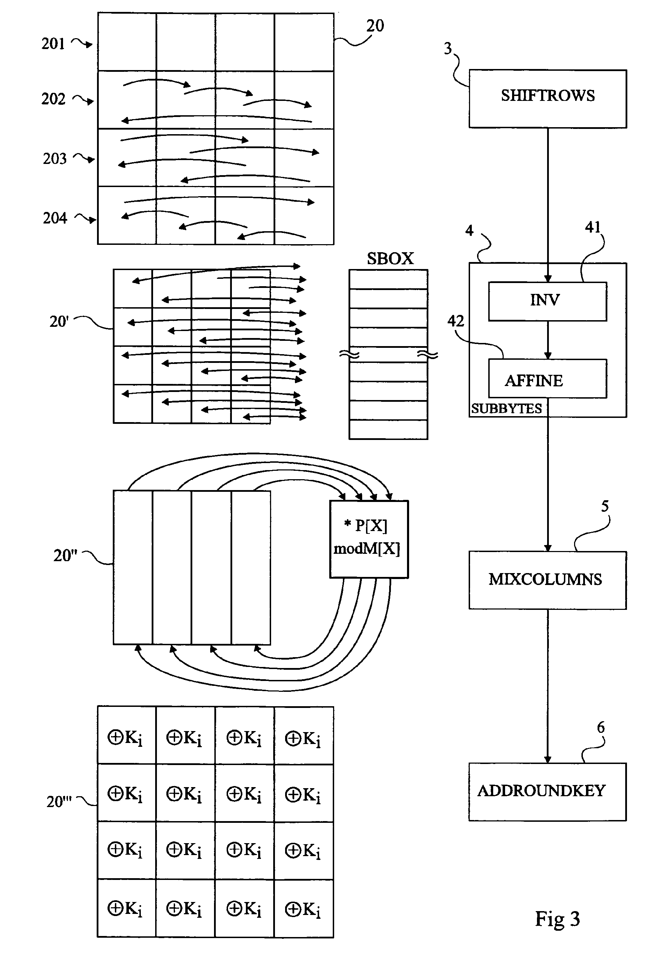

La figure 3 illustre, par un organigramme simplifié en regard d'exemples de matrices de quatre lignes et quatre colonnes d'octets binaires à laquelle est appliqué l'algorithme, les étapes principales d'un algorithme usuel de type AES. Comme indiqué précédemment, on se contente de décrire le chiffrement, le déchiffrement reprenant les transformations inverses.

L'algorithme AES chiffre un mot de données d'un nombre de bits déterminés (par exemple, 128 bits) en un autre mot de même taille. Les données à chiffrer sont constituées de plusieurs mots résultant d'un découpage préalable en mots ayant tous la même taille. Le chiffrement (ou déchiffrement) repose sur une clé secrète dont la longueur (généralement de 128 à 256 bits) conditionne la sécurité du chiffrement.

En pratique, chaque étape d'un algorithme de type AES traite une matrice de quatre lignes et quatre colonnes (20), représentant un mot et dont chaque élément est un octet ou bloc du mot de 128 bits traités. Pour simplifier la description qui suit, on fera référence, pour chaque étape, à un état représentant une matrice.

On commence par produire, à partir d'une clé secrète sur 128 bits, 11 sous clés comprenant chacune également 128 bits. De façon plus générale, à partir d'une clé d'un nombre q de bits, on dérive n sous clés K₀, ..., Kᵢ, ..., Kₙ₋₁ (figure 2) de q bits chacune. Ces sous clés sont destinées à être utilisées par les tours successifs de l'algorithme.

Une première phase non représentée de l'algorithme AES est une opération dite de "blanchiment" qui consiste à effectuer une combinaison de type OU-Exclusif (XOR) de l'état initial avec la première sous clé K₀.

Une deuxième phase de l'AES consiste à effectuer plusieurs tours ou cycles d'une même transformation faisant intervenir, à chaque tour, l'état obtenu au tour précédent et une sous clé courante Kᵢ. Le nombre de tours de la transformation correspond à n-2, c'est-à-dire au nombre de sous clés dérivées, diminué de 2.

Comme l'illustre la figure 3, chaque transformation de tour comporte quatre opérations appliquées successivement en partant d'une matrice 20 de quatre lignes et quatre colonnes d'octets binaires.

Une première étape (bloc 3, SHIFTROWS) consiste à opérer une rotation sur les trois dernières lignes de la matrice 20. La première ligne 201 de la matrice 20 reste inchangée. La deuxième ligne 202 subit une rotation d'un octet. La troisième 203 subit une rotation de deux octets. La quatrième ligne 204 subit une rotation de trois octets.

Une deuxième étape (bloc 4, SUBBYTES) de la transformation de tour constitue une transformation non linéaire dans laquelle chaque octet de la matrice 20' constituant l'état courant est remplacé par son image prise dans une table de substitution (SBOX). La table de substitution SBOX est obtenue par deux transformations successives. Une première transformation (bloc 41, INV) consiste à inverser l'octet considéré (l'élément de la matrice 20') dans le corps fini d'ordre 2⁸ (pour correspondre à l'octet), l'octet 00 constituant sa propre image. Cette inversion est suivie d'une transformation affine (bloc 42, AFFINE).

Des exemples de transformations non linéaires de substitution telles que celles exposées ci-dessus sont décrits dans l'ouvrage "The Design of Rijndael" de Joan Daemen et Vincent Rijmen, paru aux éditions Springer-Verlag (ISBN 3-540-42580-2) et dans la norme AES (FIPS PUB 197).

Les tables de substitution sont basées sur des valeurs invariantes. Ces tables sont chargées en mémoire depuis une mémoire non volatile ou calculées à la volée à partir d'une partie invariante (de coefficients ou valeurs invariants) du code de l'algorithme.

La troisième étape (bloc 5, MIXCOLUMNS) de la transformation de tour consiste à considérer chaque colonne de la matrice 20" issue de l'étape précédente comme un polynôme sur un corps fini d'ordre 2⁸, et à multiplier chacun de ces polynômes par un polynôme de combinaison P[X] modulo un polynôme M[X] .

La quatrième et dernière étape de la transformation de tour de rang i consiste à appliquer la sous clé Kᵢ à la matrice résultante 20" de l'état précédent pour obtenir une matrice 20"', dans laquelle chaque élément de la matrice 20" est combiné par un OU-Exclusif, bit à bit, avec la sous clé Kᵢ (bloc 6, ADDROUNDKEY). Cette étape 6 est la même que l'étape 2 de la première phase du chiffrement, mais effectuée avec une sous clé différente.

Les quatre étapes de la transformation de tour sont répétées n-2 fois, c'est-à-dire qu'après l'étape 6, on revient à l'étape 3 pour réeffectuer un tour avec une clé suivante.

Une troisième phase de l'algorithme de chiffrement consiste en un dernier tour, légèrement modifié par rapport à celui illustré par la figure 3. En fait, on reproduit les étapes de la transformation de tour à l'exception de la troisième (MIXCOLUMNS). Cela revient à effectuer successivement des étapes correspondant aux étapes 3, 4 et 6 avec la dernière sous clé Kₙ₋₁.

On obtient alors l'état chiffré C.

Le brevet américain US 7 403 620 décrit un exemple de protection d'un algorithme de type AES par des nombres aléatoires. Dans ce document, les tables de substitution (plus particulièrement les transformations affines 42) sont recalculées à chaque chiffrement/déchiffrement à partir d'informations invariantes stockées dans le circuit et sont utilisées, à chaque exécution, pour recalculer les tables avec la ou les quantités aléatoires. Le recours à un masquage par une quantité aléatoire améliore la sécurité de l'algorithme contre des attaques par analyse statistique de la consommation du circuit électronique qui l'exécute. Toutefois, cet algorithme reste sensible à des injections de fautes dans la mesure où, même si le résultat fourni devient un résultat incorrect, le fraudeur est capable de s'apercevoir que son action a eu ou non un effet.

Dans les modes de réalisation qui suivent, on prévoit de calculer, pour un algorithme dont une partie du code d'exécution est invariant (par exemple, des tables de substitution de type SBOX ou leurs informations invariantes en cas de masquage par des nombres aléatoires), une signature préalable des valeurs invariantes. Cette signature est stockée en mémoire non volatile 14 ou 15. Lors de l'exécution de l'algorithme, la signature enregistrée est combinée à une signature calculée avec les valeurs courantes des tables de substitution. La fonction de combinaison est choisie pour que, en cas d'identité entre les deux signatures, une variable résultante combinée avec le résultat de la transformation de tour ne modifie pas ce résultat. Par contre, si la signature courante est modifiée, il en découle une modification du résultat de la transformation de tour, donc une propagation de l'erreur sur les tours suivants sans pour autant que le fraudeur ne s'en apercoive.

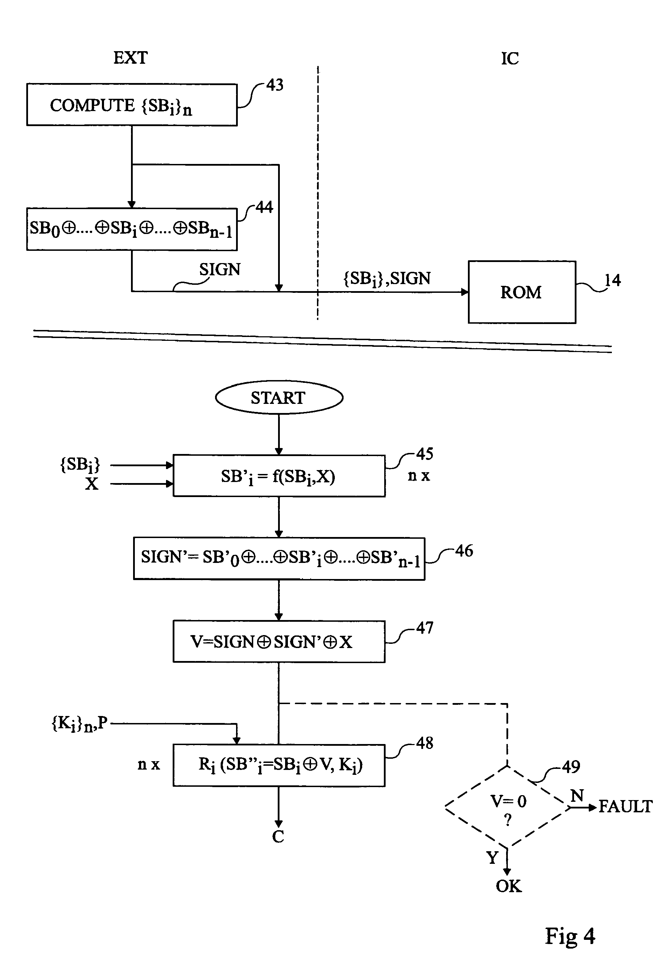

La figure 4 illustre, sous forme de blocs, un mode de réalisation d'un tel procédé de chiffrement appliqué à un algorithme de type AES.

Avant la mise en circulation du circuit électronique, les valeurs invariantes des n tables de substitution SBᵢ devant être utilisées sont calculées (bloc 43, COMPUTE {SBᵢ}ₙ) pour être mémorisées en mémoire morte (par exemple en mémoire 14, figure 1). Dans l'exemple de l'AES, deux tables sont généralement utilisées (une pour le chiffrement, l'autre pour le déchiffrement). Ce calcul est, par exemple, effectué à l'extérieur EXT du circuit par un outil de programmation. Par ailleurs, une signature SIGN de ces tables est calculée, par exemple par une combinaison OU-Exclusif de toutes leurs valeurs (bloc 44, SB₀⊕...SBᵢ⊕...SBₙ₋₁). Cette signature SIGN est également stockée en mémoire morte 14 ou non volatile 15 du circuit intégré IC.

Par la suite, lors de l'exécution de l'algorithme AES, les tables de substitution sont, dans l'exemple de la figure 4, combinées à un nombre aléatoire X par une fonction f à la manière décrite dans le document cité précédemment (bloc 45, SB'ᵢ = f(SBᵢ, X)). Puis, une signature courante SIGN' est calculée (bloc 46, SIGN' = SB'₀⊕...SB'ᵢ⊕... SB'ₙ₋₁) à partir des valeurs individuelles des table de substitution SB'ᵢ obtenues. Une variable V est alors calculée (bloc 47, V = SIGN⊕SIGN'⊕X) comme étant la combinaison de type OU-Exclusif (somme bit à bit) des signatures courantes et préenregistrées ainsi que de la valeur aléatoire.

Puis, les étapes des différentes transformations de tour Rᵢ de l'algorithme AES sont exécutées avec, comme tables de substitution SB"ᵢ, la combinaison des valeurs respectives SBᵢ avec la variable V (bloc 48, Rᵢ (SB"ᵢ = SBᵢ⊕V, Kᵢ)).

En cas de modification de l'une quelconque des tables de substitution SBᵢ (ou SB'ᵢ), la combinaison de la valeur SB'ᵢ et de la variable V ne donne pas la valeur SB"ᵢ attendue pour la table de substitution. La transformation de tour correspondante fournit alors un texte chiffré différent. Toutefois, l'algorithme s'exécute pour le reste normalement et le fraudeur ne peut pas s'apercevoir que son injection de faute a conduit à la modification d'une variable supplémentaire introduisant une erreur dans le résultat.

De plus, cette erreur se propage dans les itérations suivantes de l'algorithme. En effet, tant que le circuit électronique n'est pas réinitialisé et les tables de substitution d'origine rechargées ou recalculées depuis la mémoire non volatile, les tables courantes restent faussées. Or, même si le fraudeur n'injecte pas de nouvelle faute et s'attend donc à un résultat cohérent par rapport à l'exécution précédente, la variable V est modifiée à l'exécution suivante car la signature courante est calculée avec la table faussée de l'exécution précédente. L'erreur se propage donc par la variable V aux exécutions suivantes. De plus, les modifications qu'elle propage sont imprédictibles pour le fraudeur. Ce phénomène est amplifié en cas de masquage par une quantité aléatoire X qui change à chaque exécution.

Ainsi, le fonctionnement correct de l'algorithme est invalidé même pour les exécutions ultérieures à partir du moment où une perturbation s'est produite.

En cas de masquage par une quantité aléatoire en utilisant le OU-Exclusif comme fonction f, on veillera, à l'étape 48, à prendre la table d'origine (SBᵢ) afin de ne pas démasquer la table dans le résultat (SB"ᵢ). En effet, la valeur aléatoire est présente dans la variable V et une combinaison (SB"ᵢ= SBi⊕V, Kᵢ) annulerait les effets de la quantité aléatoire.

En variante, l'étape 47 est modifiée en V = SIGN⊕SIGN' et l'étape 48 peut alors devenir SB"ᵢ = SB'ᵢ⊕V. La différence est que, sans erreur, la variable vaut X alors qu'elle vaut 0 dans le cas illustré par la figure 4.

Selon une autre variante, la fonction de combinaison utilisée à l'étape 47 est différente de la fonction f utilisée pour le masquage par la quantité aléatoire. Par exemple, l'étape 47 peut consister en 1+(SIGN-SIGN')*X ou ((SIGN+SIGN')/2)-SIGN+X. La fonction de combinaison utilisée à l'étape 48 doit toutefois être identique ou au moins avoir le même résultat que la fonction f puisque qu'à l'étape 48, l'algorithme de chiffrement est rétabli pour faire comme s'il n'y avait pas eu d'intervention de la variable V.

Le cas échéant (pointillés en figure 4), un test 49 est effectué sur la valeur de la variable V par rapport à la valeur nulle. Si ce n'est pas le cas (sortie N du bloc 49), un bit indicateur de la présence d'une perturbation dans le fonctionnement du circuit électronique est mis à jour. On notera que si la variable V permet de détecter l'erreur, son effet prédominant est sur la propagation de cette erreur aux tours et exécutions suivantes. En effet, même en utilisant l'option de mise à jour d'un indicateur d'erreur, toute réaction du fraudeur est vouée à l'échec car l'erreur est de toute façon propagée. Pour éviter que cette détection ne soit repérée par un fraudeur dans une analyse de la consommation du circuit, le test sur la variable est, de préférence, décorrelé du chiffrement et du calcul de signature. Par exemple, le test est fait sur le résultat d'une opération de la variable avec une donnée connue (stockée en mémoire morte). Le résultat attendu est également stocké en mémoire morte et le test est lancé par le système n'importe quand (indépendamment des calculs).

En variante, les données invariantes de l'algorithme AES prises en compte pour le calcul de signature sont les coefficients du polynôme de combinaison P[X] de la troisième étape (MIXCOLUMNS).

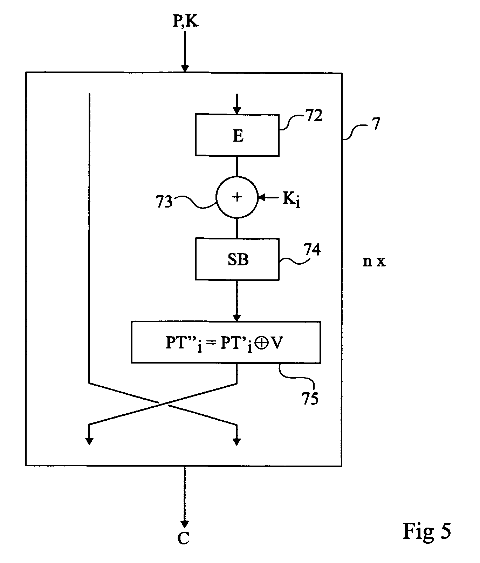

La figure 5 illustre un mode de mise en oeuvre appliqué à un algorithme de type DES.

L'algorithme DES est un algorithme de chiffrement par blocs permutant, de transformation de tour en transformation de tour, le traitement de la partie gauche et de la partie droite du message à chiffrer. La figure 5 représente une transformation de tour 7 qui consiste en une expansion (bloc 72, E) d'un mot représentant la partie droite de la moitié d'un mot à chiffrer. Le résultat de cette fonction d'expansion est mélangé (addition bit à bit 73) avec une sous clé Kᵢ affectée au tour concerné. Puis, le résultat de la combinaison est traité par des tables de substitution SB (bloc 74). Enfin, les sorties des tables de substitution sont réorganisées conformément à une table de permutation invariante PTᵢ. Cette table est notée PTᵢ si elle correspond à la table d'origine, PT'ᵢ si elle correspond à la valeur courante (susceptible d'avoir été perturbée). La mise en oeuvre de la signature peut être effectuée sur les tables de permutation qui constituent un invariant pour l'exécution de l'algorithme. La table courante PT'ᵢ est alors combinée (bloc 75, PT"ᵢ =PT'ᵢ+V) à la variable V calculée d'après les signatures comme décrit précédemment pour obtenir la table PT"ᵢ appliquée à la partie droite du mot. Le reste du fonctionnement se déduit du fonctionnement usuel de l'algorithme DES et de ce qui a été exposé précédemment en relation avec l'algorithme AES.

Un avantage des modes de réalisation décrits est qu'ils permettent de fausser le fonctionnement de l'algorithme de façon transparente pour l'utilisateur dès qu'une perturbation se produit.

Un autre avantage est que l'algorithme reste faussé jusqu'à une réinitialisation du circuit, plus généralement, jusqu'à ce que l'invariant qui lui est attaché soit rechargé ou recalculé depuis une mémoire non volatile.

Un autre avantage est que l'algorithme n'est que peu modifié.

La mise en oeuvre du procédé décrit se traduit par le fait qu'une exécution de l'algorithme, ultérieure à une exécution dans laquelle une faute a été injectée, fournit un résultat erroné (propagation de l'erreur), même sans nouvelle injection de faute, tant que les valeurs invariantes d'origine de l'algorithme n'ont pas été rechargées (par exemple, par réinitialisation du circuit).

On notera que le procédé décrit protège l'exécution d'un algorithme contre des injections de faute que celles-ci soient accidentelles ou volontaires. Même pour des fautes liées à une perturbation accidentelle dans le fonctionnement du circuit, il peut être intéressant de faire en sorte que le fonctionnement ultérieur soit perturbé pour éviter toute conséquence néfaste sur la confidentialité des clés.

Divers modes de réalisation ont été décrits. Diverses variantes et modifications apparaîtront à l'homme de l'art. En particulier, l'invention a été décrite en relation avec un exemple de fonction de combinaison OU-Exclusif. Toutefois, d'autres fonctions de combinaison de l'invariant et de la signature pourront être envisagées, pourvu de respecter les fonctionnalités décrites. Par exemple, la signature pourra être un CRC (vérification par redondance cyclique) et la combinaison pourra être une soustraction. Selon la fonction de combinaison utilisée, on peut prévoir que la variable V prenne, en fonctionnement normal, une valeur différente de zéro. Enfin, la mise en oeuvre pratique de l'invention, en modifiant le code logiciel d'un algorithme ou une machine d'états en logique câblée l'exécutant, est à la portée de l'homme du métier à partir des indications fonctionnelles données ci-dessus. L'invention s'applique, par exemple, à des processeurs intégrés dans des cartes à puce, dans des plateformes sécurisées et plus généralement dans tout circuit de chiffrement ou déchiffrement.

## Revendications

1. Procédé de protection de l'exécution d'un algorithme de chiffrement ou de déchiffrement contre l'introduction d'une perturbation dans une étape mettant en oeuvre une ou plusieurs premières valeurs obtenues à partir de deuxième valeurs censées être invariantes et stockées dans une mémoire non volatile (14, 15), **caractérisé en ce que**, lors d'une exécution de l'algorithme :
une signature courante (SIGN') des premières valeurs est calculée ;
cette signature courante est combinée avec une signature de référence (SIGN) préalablement mémorisée en mémoire non volatile (14, 15) ; et
le résultat de cette combinaison est pris en compte au moins dans l'étape de l'algorithme mettant en oeuvre lesdites premières valeurs.

2. Procédé selon la revendication 1, dans lequel la fonction de combinaison est choisie pour que, en cas d'identité entre les deux signatures (SIGN, SIGN'), une variable résultante (V) combinée avec le résultat de ladite étape ne modifie pas ce résultat.

3. Procédé selon la revendication 2, dans lequel ladite fonction de combinaison est un OU-Exclusif.

4. Procédé selon l'une quelconque des revendications 1 à 3, dans lequel les premières et secondes valeurs sont identiques.

5. Procédé selon l'une quelconque des revendications 1 à 3, dans lequel les premières valeurs sont calculées à partir des deuxièmes valeurs et d'une quantité aléatoire.

6. Procédé selon l'une quelconque des revendications 1 à 5, dans lequel les premières valeurs correspondent à des tables de substitution de valeurs traitées par l'algorithme.

7. Procédé selon la revendication 6, appliqué à un algorithme de type AES.

8. Procédé selon la revendication 7, dans lequel :
des premières tables de substitution (SBᵢ) sont combinées à une valeur aléatoire (X) ;
la signature courante (SIGN') est calculée à partir du résultat (SB'i) de la combinaison précédente ;
la variable (V) est calculée en combinant les signatures de référence et courante ainsi que la valeur aléatoire ; et
les étapes de chiffrement (Rᵢ) sont exécutées avec, comme tables de substitution (SB"ᵢ), les combinaisons des premières tables avec la variable.

9. Procédé selon l'une quelconque des revendications 1 à 6, appliqué à un algorithme de type DES.

10. Circuit électronique de traitement algorithmique adapté à la mise en oeuvre du procédé conformément à l'une quelconque des revendications 1 à 9.

## Claims

1. A method for protecting the execution of a ciphering or deciphering algorithm against the introduction of a disturbance in a step implementing one or several first values obtained from second values supposed to be invariant and stored in a non-volatile memory (14, 15), **characterized in that**, during an execution of the algorithm:
a current signature (SIGN') of the first values is calculated;
this current signature is combined with a reference signature (SIGN) previously stored in a non-volatile memory (14, 15); and
the result of this combination is taken into account at least in the step of the algorithm implementing said first values.

2. The method of claim 1, wherein the combination function is selected so that, in case of an identity between the two signatures (SIGN, SIGN'), a resulting variable (V) combined with the result of said step does not modify this result.

3. The method of claim 2, wherein said combination function is an XOR.

4. The method of any of claims 1 to 3, wherein the first and second values are identical.

5. The method of any of claims 1 to 3, wherein the first values are calculated from the second values and a random quantity.

6. The method of any of claims 1 to 5, wherein the first values correspond to substitution tables processed by the algorithm.

7. The method of claim 6, applied to an algorithm of AES type.

8. The method of claim 7, wherein:
first substitution boxes (SBᵢ) are combined with a random value (X);
the current signature (SIGN') is calculated from the result (SB'i) of the previous combination;
the variable (V) is calculated by combining the reference and current signatures as well as the random value; and
the ciphering steps (Ri) are executed with, as substitution boxes (SB"ᵢ), the combinations of the first tables with the variable.

9. The method of any of claims 1 to 6, applied to an algorithm of DES type.

10. An algorithmic processing electronic circuit capable of implementing the method of any of claims 1 to 9.

## Patentansprüche

1. Ein Verfahren zum Schutz der Ausführung eines Chiffrier- oder Dechiffrier-Algorithmus gegenüber der Einführung einer Störung in einem Schritt der Implementierung eines oder mehrerer erster Werte erhalten aus zweiten Werten, die als invariant angesehen werden und die in einem nicht flüchtigen Speicher (14, 15) gespeichert sind, **dadurch gekennzeichnet, dass** während einer Ausführung des Algorithmus folgendes vorgesehen ist:
eine laufende Signatur (SIGN') der ersten Werte wird berechnet;
diese laufende Signatur wird mit einer Bezugssignatur (SIGN), die zuvor in einem nicht-flüchtigen Speicher (14, 15) gespeichert wurde, kombiniert; und
das Ergebnis dieser Kombination wird mindestens in dem Schritt, wo der Algorithmus die ersten Werte implementiert berücksichtigt.

2. Verfahren nach Anspruch 1, wobei die Kombinationsfunktion derart ausgewählt ist, dass im Falle einer Identität zwischen den zwei Signaturen (SIGN, SIGN'), eine resultierende Variable (V) kombiniert mit dem Resultat des erwähnten Schrittes dieses Resultat nicht modifiziert.

3. Verfahren nach Anspruch 2, wobei die erwähnte Kombinationsfunktion ein XOR ist.

4. Verfahren nach einem der Ansprüche 1 bis 3, wobei die ersten und zweiten Werte identisch sind.

5. Verfahren nach einem der Ansprüche 1 bis 3, wobei die ersten Werte aus den zweiten Werten und einer Zufallsgröße berechnet werden.

6. Verfahren nach einem der Ansprüche 1 bis 5, wobei die ersten Werte Substitutionstabellen entsprechen, die durch den Algorithmus verarbeitet werden.

7. Verfahren nach Anspruch 6, angewandt auf einen Algorithmus des AES-Typs.

8. Verfahren nach Anspruch 7, wobei folgendes vorgesehen ist:
die ersten Substitionstabellen (SBᵢ) werden mit einem Zufallswert (X) kombiniert;
die laufende Signatur (SIGN') wird aus dem Ergebnis (SB'ᵢ) der vorherigen Kombination berechnet; und
die Variable (V) wird berechnet durch Kombination der Bezugssignaturen- und laufenden Signaturen und auch dem Zufallswert; und
die Verschlüsselungsschritte (Rᵢ) werden ausgeführt mit, als Substitutionstabellen (SB"ᵢ), den Kombiniationen der ersten Tabellen mit der Variablen.

9. Verfahren nach einem der Ansprüche 1 bis 6 angewandt auf einen Algorithmus des DES-Typs.

10. Eine algorithmische elektronische Verarbeitungsschaltung, die in der Lage ist das Verfahren nach einem der Ansprüche 1 bis 9 zu implementieren.
